# EUROPÄISCHE PATENTSCHRIFT

(11) **EP 0 518 067 B1**
(45) Veröffentlichungstag und Bekanntmachung des Hinweises auf die Patenterteilung: **24.05.1995**
(21) Anmeldenummer: 92107980.2
(22) Anmeldetag: 12.05.1992
(51) Int. Cl.: C09J 163/00, C08G 59/38, C08L 63/00

(54) **Reaktiver Warmschmelzklebstoff**
Reactive hot-melt adhesive
Adhésif thermofusible réactif

(30) Priorität: 12.06.1991 DE 4122450
(43) Veröffentlichungstag der Anmeldung: 16.12.1992
(73) Patentinhaber: Beiersdorf Aktiengesellschaft, 20245 Hamburg (DE)
(72) Erfinder: Kramer, Jürgen, Dr., W-2107 Rosengarten-Klecken (DE); Engeldinger, Hans-Karl, W-2000 Hamburg 54 (DE); Siepmann, Jürgen, W-2082 Moorrege (DE)

(56) Entgegenhaltungen:
- EP-A- 0 362 772
- WO-A-87/06243
- GB-A- 1 276 372
- GB-A- 1 349 569
- GB-A- 1 484 797
- DATABASE WPI Derwent Publications Ltd., London, GB; AN 83-62008K(26) & JP-A-58 083 031

## Beschreibung

Die Erfindung betrifft einen einkomponentigen, reaktiven Warmschmelzklebstoff auf der Basis von Epoxidharzen und epoxidiertem Nitrilkautschuk mit latentem Härter und strukturgebendem Fasermaterial, gegebenenfalls mit Beschleunigern, Füllstoffen, Farbstoffen, thixotropiefördernden Mitteln und ähnlichen Zusatzstoffen. Der erfindungsgemäße Klebstoff zeichnet sich dadurch aus, daß er bei ca. 40 °C erweicht und aufgetragen werden kann, dennoch bis zu Temperaturen von 120 °C thixotrop bleibt, d.h. nicht an senkrechten Flächen abläuft. Nach anschließender Heißhärtung liefert er feste, zähelastische Verbindungen, auch bei der Verklebung von ölverschmutzten Metalloberflächen. Damit ist der Klebstoff geeignet für das konstruktive Verbinden von Auto-Karrosserieblechen - entsprechend den Anforderungen der KFZ-Industrie.

Aus der Literatur sind einkomponentige, pastöse Epoxidharzsysteme mit Zusätzen zur Flexibilisierung bekannt, die heiß gehärtet werden. So beschreibt die Yokohama-Rubber im Japan-Patent J 611 43480-A von 1.7.86 einen solchen Klebstoff, der im Gegensatz zu der vorliegenden Erfindung Thermoplaste wie Polyvinylacetal, z.B. - formal oder - butyral benötigt.

In der deutschen Anmeldung DE 382 7626 vom 10.08.88 beschreibt die Fa. Teroson einen reaktiven Schmelzklebstoff auf Epoxidharzbasis, dem zur Zähelastifizierung aminterminiertes Polyoxypropylen zugesetzt wird - nicht aber Nitrilkautschuk.

WO-A-8 706 243 beschreibt eine strukturelle Epoxikleber-Paste, die bei Raumtemperatur härtbar ist. Derwent AN 83-62008K (26) mit JP-A-58 083 031 beschreibt ein Prepreg imprägniert mit einem Epoxiharz aus einerseits Epoxiharz und andererseits einem Reaktionsprodukt aus flüssigem Butadien-Acrylnitril-Copolymer mit Carboxylgruppen an beiden Enden. GB-A-1 349 569 beschreibt ein härtendes Epoxiharz, wobei die Mischung ein Polymer mit Epoxiradikalen, ein Epoxiharz und Füllstoff enthält. GB-A-1 276 372 beschreibt einen Strukturkleber der fließfähig und härtbar ist und der mindestens ein härtbares Epoxiharz mit mehr als 1,2 Epoxigruppen pro Molekül enthält, neben Nitrilkautschuk, Härter und einem zersetzbaren Stoff. EP-A-0 362 772 beschreibt einen Strukturkleber aus thermoplastischem Epoxid, aus der Reaktion eines Epoxids mit einem reaktiven Elastomer. GB-A-1 484 797 beschreibt ein Epoxiharz, das bei Raumtemperatur härtbar ist, enthaltend ein Reaktionsprodukt aus einem Diepoxid mit einem Carboxy-terminierten Butadien/Acrylnitril Copolymer und einem primär-Amin-terminierten Polyether.

### Eigenschaften und Anwendung

Der erfindungsgemäße Klebstoff hat bei Raumtemperatur eine zähe, halbfeste Konsistenz. Nach leichter Erwärmung auf ca. 40 °C ist er soweit erweicht, daß er sich aus einer Kartusche fördern und auftragen läßt. Er wird daher als Warmschmelzklebstoff charakterisiert, im Gegensatz zu einem Heißschmelzklebstoff, der normalerweise bei Temperaturen von über 100 °C appliziert wird.

Eine Besonderheit liegt in dem günstigen rheologischen Verhalten, des Klebstoffes, da die Thixotropie bei Erwärmung über einen weiten Temperaturbereich bis über 100 °C erhalten bleibt, im Gegensatz zu Klebstoffen, die mineralische, nichtfaserige Thixotropierhilfsmittel, z.B. pyrogene Kieselsäure enthalten. Eine auf ein senkrecht stehendes Blech aufgetragene Klebstoff-Raupe zeigte im Test bis 120 °C keine Tendenz zum Abfließen.

Die Härtung erfolgt bei höheren Temperaturen, z.B. ab 150 °C. Eine weitgehende Aushärtung kann beispielsweise bei 190 °C in 25-30 Minuten erfolgen.

Der Klebstoff liefert eine sehr gute Metallhaftung. Selbst auf geölten Stahlblechen konnten Zugscherfestigkeiten bis zu 20 N/mm² erzielt werden.Zugleich zeigt die Klebfuge ein ausgesprochen zähelastisches Verhalten - also hohe Resistenz gegen Schlag- und Schwingungsbeanspruchungen - was durch den Gehalt an chemisch eingebundenen Nitrilkautschuk bewirkt wird.

Der erfindungsgemäße Klebstoff bietet sich an beispielsweise für den Einsatz beim konstruktiven Verkleben von Automobilblechen im Karosseriebereich. Hier ist die Fähigkeit, auch ölbenetzte Bleche fest zu verbinden, von besonderem Vorteil.

Nach dem Warmauftrag des Klebstoffes werden die Bleche zusammengefügt und nur bei größeren mechanischen Spannungen zusätzlich fixiert. Der noch nicht gehärtete Klebstoff fließt nicht aus der Fuge heraus, auch nicht bei Folgeprozessen mit Temperatureinwirkung bis 120 °C. Er wird von den im Automobilbau eingesetzten Reinigungs- und Phosphatierungsbädern nicht ausgewaschen. Die Aushärtung des Klebstoffes erfolgt zugleich mit dem Einbrennen der Karosserielacke in den Lackieröfen, so daß keine zusätzlich Warmbehandlung notwendig ist.

Unsere Prüfungen zeigten darüber hinaus eine gute Beständigkeit der Verklebungen nach Bewitterungs-, Salzsprüh- und Überbrenntests, so daß die bekannten Anforderungen der Automobilhersteller erfüllt werden.

### Zusammensetzung und Herstellung

Der erfindungsgemäße Klebstoff ist primär aufgebaut auf Epoxidharzen aus Bisphenol-A oder -F oder Mischungen aus beiden - teilweise umgesetzt mit flüssigem, carboxylhaltigem Nitrilkautschuk - und hochviskosen bis festen Harzen auf Basis Epoxi-Novolak. Zum Heißhärten enthält das Produkt einen latenten Härter, z.B. Dicyandiamid.

Bei den Versuchen zur Konsistenzgebung stellte sich überraschend heraus, daß die Kombination der beschriebenen Basisharze und geringe Zusätze (vorzugsweise unter 3 %, insbesondere 0,5 - 3 %) an kurzen, pulpeartigen Aramidfasern zu einer thixotropem Fließverhalten führt, das bei Erwärmung über einen weiten Temperaturbereich bis über 100 °C erhalten bleibt.

Zum Erzielen spezieller Eigenschaften können dem Basisklebstoff Zusatzstoffe sekundärer Art beigefügt werden:
* mineralische Füllstoffe, z.B. Carbonate, Silikate oder Oxide zur Beeinflussung der Dichte, der Endfestigkeit und des Brandverhaltens sowie zur Erhöhung der Wirtschaftlichkeit
* Beschleuniger , z.B. Diuron, zur Erhöhung der Reaktivität
* Metallpulver, z.B. Aluminium, zur Erhöhung der Wärmeleitfähigkeit,
   und Verbesserung der Durchschweißbarkeit
* Farbstoffe, vorzugsweise anorganische Pigmentfarben wie Eisenoxidrot.

Ein typischer erfindungsgemäßer Klebstoff wurde wie folgt hergestellt:In einem beheizbaren Planetenmischer wurden 6 Gew.-Teile eines flüssigen Epoxidharzes vom Typus Bisphenol A/F zusammen mit 4 Gew.-Teilen eines flüssigen, carboxylterminierten Nitrilkautschukes auf 95-100 °C erwärmt, nach Zugabe eines Katalysators eine Stunde lang bei gleicher Temperatur weiter gerührt und anschließend abgekühlt. Das so erhaltene Addukt wurde in einem Kneter nach Zugabe von festem Epoxi-Novolak, Dicyandiamid, Diuron und Aramid-Fasern bei 60 °C homogenisiert. Das Endprodukt wurde in Kartuschen abgefüllt.

| **Beispiel** | |
|---|---|
| Epoxidharz, Typ Bisphenol A/F; | 30-55 Gew.% vorzugsw. |
| 36,0 | |
| Carboxylterminierter Nitrilkautschuk | 20-33 Gew.% vorzugsw. |
| 24,0 | |
| Epoxi-Novolak; | 10-40 Gew.% vorzugsw. |
| 30,0 | |
| latenter Härter; | 6-10 Gew.% vorzugsw. |
| 8,0 | |
| Beschleuniger; | 0-2 Gew.% vorzugsw. |
| 0,5 | |
| Aramid-Fasern; | 0,5-3,0 Gew.% vorzugsw. |
| 1,5 | |
| 100,0 | |

### Klebfestigkeiten

von Verbunden aus definiert geölten, verzinkten Stahlblechen mit 0,1 mm dicker Klebfuge, 25 min bei 190 °C gehärtet; danach verschiedenen Prüfungen unterzogen.

Angegeben sind Zugscherfestigkeiten in N/mm² (Mittelwerte aus 5 Einzelbestimmungen):

| **Test (Bedingungen)** | **Ergebnis (N/mm²)** |
|---|---|
| Anfangswert | 17,6 ± 1,2 |
| Wechselklima (90 Tage -40 °C/+80 °C bei 80 % r.LF. | 7,3 ± 0,4 |
| Salzsprühtest (30 Tage) | 14,8 ± 1,0 |
| Überbrenntest (30 min. 210 °C) | 17,1 ± 1,3 |

## Patentansprüche

1. Reaktiver Warmschmelzklebstoff, der auf Epoxidharzen aus Bisphenol -A oder -F oder Mischungen aus beidem, teilweise umgesetzt mit flüssigem carboxylhaltigem Nitrilkautschuk, und hochviskosen bis festen Harzen auf Basis Epoxi-Novolak aufgebaut ist und einen thermisch aktivierbaren latenten Härter, strukturgebendes organisches Fasermaterial sowie gegebenenfalls Beschleuniger, Füll- und Farbstoffe und weitere Zusatzstoffe enthält, wobei mindestens eine Harzkomponente durch Umsetzung von Epoxiharz mit carboxylterminiertem Nitrilkautschuk erhältlich ist, dadurch gekennzeichnet, daß das strukturgebende organische Fasermaterial aus 0,5 bis 3,0 Gew.-% kurzen, pulpeartigen Aramidfasern besteht.

2. Verwendung eines reaktiven Warmschmelzklebstoffs nach Anspruch 1 zum Verkleben von Metallen, insbesondere ölhaltigen Blechen.

## Claims

1. Reactive warm-melt adhesive which is composed of epoxide resins based on bisphenol A or bisphenol F or mixtures of the two, partially reacted with liquid carboxyl-containing nitrile rubber, and highly viscous to solid resins based on epoxy novolak and contains a latent curing agent which can be activated by heat, structure-imparting organic fibre material and, optionally, accelerators, fillers and colorants and further additives, where at least one resin component is obtainable by reaction of epoxide resin with carboxyl-terminated nitrile rubber, characterised in that the structure-imparting organic fibre material consists of 0.5 to 3.0% by weight of short, pulp-like aramid fibres.

2. Use of a reactive warm-melt adhesive according to Claim 1 for joining metals, in particular oil-containing sheet metal.

## Revendications

1. Adhésif réactif, à fusion tiède, qui est synthétisé à partir de résines époxydes de bisphénol A ou F ou de mélanges des deux, ayant partiellement réagi avec du caoutchouc nitrile fluide contenant des groupements carboxyles, et à partir de résines à consistance hautement visqueuse à solide, à base de résines époxy-Novolaques et qui contient un agent de durcissement latent thermiquement activable, du matériau fibreux impartissant une structure ainsi que, le cas échéant, des activateurs, des charges et des colorants et d'autres additifs, l'un au moins des composants de résine pouvant s'obtenir par réaction de la résine époxyde avec le caoutchouc nitrile à groupements terminaux carboxyles, caractérisé en ce que le matériau fibreux impartissant la structure se compose de 0,5 à 3,0 % en poids de fibres d'aramide courtes, sous forme de pulpe.

2. Utilisation d'un adhésif réactif à fusion tiède selon la revendication 1, pour le collage de métaux, en particulier de tôles contenant de l'huile.
